(19) Europäisches Patentamt
European Patent Office
Office européen des brevets

(11) **EP 4 586 335 A1**

(12) **EUROPEAN PATENT APPLICATION**

(43) Date of publication:
**16.07.2025  Bulletin 2025/29**

(21) Application number: **25151092.1**

(22) Date of filing: **10.01.2025**

(51) International Patent Classification (IPC):
***H01M 4/134*** (2010.01)   ***H01M 4/36*** (2006.01)
***H01M 4/38*** (2006.01)   ***H01M 10/0525*** (2010.01)
***H01M 4/02*** (2006.01)

(52) Cooperative Patent Classification (CPC):
**H01M 4/362; H01M 4/134; H01M 4/364;**
**H01M 4/366; H01M 4/386; H01M 10/0525;**
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.01.2024  KR 20240004040**

(71) Applicants:
• **SK On Co., Ltd.**
  **Seoul 03161 (KR)**
• **SK Innovation Co., Ltd.**
  **Seoul 03188 (KR)**

(72) Inventors:
• **CHUNG, Ju Ho**
  **Daejeon 34124 (KR)**
• **LEE, Kwang Ho**
  **Daejeon 34124 (KR)**
• **KIM, Seon Ah**
  **Daejeon 34124 (KR)**
• **PARK, Yang Kyu**
  **Daejeon 34124 (KR)**
• **LEE, Jong Hyuk**
  **Daejeon 34124 (KR)**

(74) Representative: **Prüfer & Partner mbB**
  **Patentanwälte · Rechtsanwälte**
  **Sohnckestraße 12**
  **81479 München (DE)**

(54) **ANODE ACTIVE MATERIAL FOR LITHIUM SECONDARY BATTERY AND LITHIUM SECONDARY BATTERY INCLUDING THE SAME**

(57)  An anode active material for a lithium secondary battery includes a silicon-based active material particle doped with a metal element and including pores. A porosity of the silicon-based active material particle is in a range from 0.4% to 3.5%. A lithium secondary battery includes the anode and a cathode facing the anode.

FIG. 1

EP 4 586 335 A1

**Description**

TECHNICAL FIELD

The disclosure of this patent application relates to an anode active material for a lithium secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Recently, as an application range of the lithium secondary battery is expanded, the lithium secondary battery having higher capacity and power is being developed. For example, silicon having high capacity can be combined with carbon to be used as an anode active material.

However, a silicon-carbon composite anode active material has an increased volume expansion difference to result in reduction of a life-span by cracks of the anode active material and consumption of an electrolyte solution.

SUMMARY

According to an aspect of the present disclosure, there is provided an anode active material for a lithium secondary battery having improved life-span and power properties.

According to an aspect of the present disclosure, there is provided a method of preparing an anode active material for a lithium secondary battery having improved life-span and power properties.

According to an aspect of the present disclosure, there is provided a lithium secondary battery having improved life-span and power properties.

An anode active material for a lithium secondary battery includes a silicon-based active material particle being doped with a metal element and including pores. A porosity of the silicon-based active material particle as defined by Equation 1 is in a range from 0.4% to 3.5%.

$$[\text{Equation 1}]$$

$$\text{porosity (\%)} = (Ap/As)*100$$

In Equation 1, Ap is a total sum of cross-sectional areas of the pores included in a 65 K resolution image of a cross-section of the silicon-based active material particle obtained by a scanning electron microscope (SEM), and As is a total cross-sectional area of the silicon-based active material particle included in the 65 K resolution image of the cross-section of the silicon-based active material particle obtained by the SEM.

In some embodiments, the metal element may include Mg, Al, Ca, Ti and/or V.

In some embodiments, the silicon-based active material particle includes Si, SiOx ($0<x\leq2$) and a Si-C composite.

In some embodiments, the porosity may be in a range from 0.97% to 3.45%.

In some embodiments, the average pore diameter of the silicon-based active material particle as defined by Equation 2 may be in a range from 2 nm to 30 nm.

$$[\text{Equation 2}]$$

$$average\ pore\ diameter\ (nm) = 2 \times \sqrt{\frac{Ap}{Np \times \pi}}$$

In Equation 2, Ap is the total sum of cross-sectional areas of the pores included in the 65 K resolution image of the cross-section of the silicon-based active material particle obtained by the SEM, and Np is the total number of the pores included in the 65 K resolution image of the cross-section of the silicon-based active material particle obtained by the SEM.

In some embodiments, the average pore diameter may be in a range from 17 nm to 26 nm.

In some embodiments, the silicon-based active material particle may include a carbon coating disposed on a surface portion thereof.

In some embodiments, the silicon-based active material particle may have a specific surface area of 7.0 m$^2$/g or less.

In some embodiments, the silicon-based active material particle may have a specific surface area in a range from 2.4 m$^2$/g to 7.0 m$^2$/g.

In some embodiments, the anode active material for a lithium secondary battery may further include a carbon-based active material particle.

In some embodiments, the carbon-based active material particle may include soft carbon, hard carbon, artificial graphite and/or natural graphite.

In some embodiments, the carbon-based active material particle may include artificial graphite.

In some embodiments, a content of the silicon-based active material particle may be in a range from 0.1 wt% to 35 wt% based on a total weight of the anode active material.

In some embodiments, a content of the metal element may be in a range from 3 wt% to 15 wt% based on a weight of the silicon-based active material particle.

A lithium secondary battery includes an anode including the above-described anode active material for a lithium secondary battery, and a cathode facing the anode.

According to an embodiment of the present disclosure, an initial capacity efficiency of a lithium secondary battery may be improved while improving life-span properties and initial discharge capacity.

According to an embodiment of the present disclosure, pores having relatively small diameters may be sufficiently distributed so that volume expansion of silicon-based active material particles may be further suppressed.

The anode active material and the lithium secondary battery according to the present disclosure may be widely applied in green technology fields such as an electric vehicle, a battery charging station, a solar power generation, a wind power generation, etc., using a battery, etc. The anode active material and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIG. 1 and FIG. 2 are a schematic plan view and a schematic cross-sectional view, respectively, illustrating a lithium secondary battery in accordance with example embodiments.
FIGS. 3 to 10 are 65 K resolution scanning electron microscope (SEM) images of cross-sections of silicon-based active material particles according to Examples 1 to 4 and Comparative Examples 1 to 4, respectively.

DETAILED DESCRIPTION OF THE EMBODIMENTS

According to embodiments disclosed in the present application, an anode active material for a lithium secondary battery (hereinafter, that may be abbreviated as an anode active material) including a silicon-based active material particle. According to embodiments of the present disclosure, a lithium secondary battery (hereinafter, that may be abbreviated as a secondary battery) including the anode active material is also provided.

The anode active material includes a silicon-based (silicon-containing) active material particle including pores. For example, the anode active material may include a plurality of the silicon-based active material particles.

For example, the silicon-based active material particle may provide high capacity properties to the anode active material. Accordingly, the capacity properties of the anode active material may be improved.

In some embodiments, the silicon-based active material particle may include Si, SiOx ($0<x\leq2$), and/or a Si-C composite. For example, the Si-C composite may include a metallurgical grade silicon.

In some embodiments, the silicon-based active material particle may include SiOx ($0<x\leq2$). In an embodiment, the silicon-based active material particle may be SiOx ($0<x<2$). Accordingly, a volume expansion ratio may be reduced compared to that of Si, so that life-span properties may be relatively improved.

A porosity of the silicon-based active material particle defined by Equation 1 is in a range from 0.4% to 3.5%.

[Equation 1]

$$\text{porosity } (\%) = (Ap/As)*100$$

In Equation 1, Ap is a total sum of cross-sectional areas of the pores included in a 65 K resolution image of a cross-section of the silicon-based active material particle obtained by a scanning electron microscope (SEM). As is a total cross-sectional area of the silicon-based active material particle included in the 65 K resolution image of the cross-section of the silicon-based active material particle obtained by the SEM.

For example, the porosity may be a ratio of the sum of the cross-sectional areas of the pores relative to a total area of the silicon-based active material particle including the cross-sectional areas of the pores in the 65 K resolution image of the cross-section of the silicon-based active material particle obtained by the SEM.

For example, Ap may be a sum of the cross-sectional areas of pores existing within a virtual rectangular region having a horizontal length of 1.959 $\mu$m and a vertical length of 1.306 $\mu$m in a 65 K resolution image of the cross-section of the silicon-based active material particle using the SEM.

For example, As may be an area of a virtual rectangular region having a horizontal length of 1.959 $\mu$m and a vertical length of 1.306 $\mu$m in the 65 K resolution image of the cross-section of the silicon-based active material particle using the SEM.

In the above porosity range, volume expansion of the silicon-based active material particles may be alleviated by the pores. Accordingly, the initial capacity efficiency of the lithium secondary battery may be improved while the life-span properties and the initial discharge capacity may be improved.

When the porosity is less than 0.4%, the pores may not be sufficiently formed in the silicon-based active material particle, so that the volume expansion ratio may increase and the life-span properties may be deteriorated.

When the porosity exceeds 3.5%, a specific surface area of the silicon-based active material particle may be excessively increased, so that side reactions between an electrolyte solution and the silicon-based active material particle may be increased and the life-span properties may be deteriorated.

In some embodiments, the porosity of the silicon-based active material particle may be in a range from 0.97% to 3.45%. In the above range, volume expansion and deterioration of the life-span properties of the silicon-based active material may be more effectively prevented.

In some embodiments, the porosity may be measured from one silicon-based active material particle. In some embodiments, the porosity may be measured from a plurality of the silicon-based active material particles.

For example, a cross-section of each of the plurality of the silicon-based active material particles may be photographed by the SEM to obtain 65 K resolution images, and Ap and As of each of the images may be measured. The total sum of the Ap values may be divided by the total sum of the As values and multiplied by 100 to calculate the porosity. Accordingly, accuracy of the porosity measurement may be relatively improved.

In example embodiments, the silicon-based active material particle is doped with a metal element. Accordingly, pores may be sufficiently formed at an inside of the silicon-based active material particle, and the initial capacity efficiency of the secondary battery may be improved.

In some embodiments, the metal element may include at least one selected from the group consisting of Mg, Al, Ca, Ti and V.

In an embodiment, the metal element may include Mg. For example, the porosity may be further increased by including Mg as a doping element in the silicon-based active material particle.

In some embodiments, a content of the metal element based on a weight of the silicon-based active material particle may be in a range from 3 wt% to 15 wt%, or from 7 wt% to 15 wt%. In an embodiment, the content of the metal element based on the weight of the silicon-based active material particle may be in a range from 7 wt% to 12 wt%, from 7 wt% to 11.7 wt%, from 7.5 wt% to 11.5 wt%, from 7.5 wt% to 10 wt%, or from 7.5 wt% to 9 wt%.

In example embodiments, an average pore diameter of the silicon-based active material particle defined by Equation 2 may be in a range from 2 nm to 30 nm.

[Equation 2]

$$average\ pore\ diameter\ (nm) = 2 \times \sqrt{\frac{Ap}{Np \times \pi}}$$

In Equation 2, Ap is a total sum of cross-sectional areas of pores included in a 65 K resolution image of a cross-section of the silicon-based active material particle obtained by an SEM. Np is the total number of the pores included in the 65 K resolution image of the cross-section of the silicon-based active material particle obtained by the SEM.

For example, Ap of Equation 2 may be measured in the same way as that of Ap of Equation 1.

For example, Np may be the total number of pores present in a virtual rectangular area with a horizontal length of 1.959 $\mu$m and a vertical length of 1.306 $\mu$m in the 65 K resolution image of the cross-section of the silicon-based active material particle obtained by the SEM.

In the average pore diameter range and the porosity range, pores having a relatively small diameter may be sufficiently distributed to further suppress volume expansion of the silicon-based active material particles. In some embodiments, the average pore diameter of the silicon-based active material particle may be in a range from 17 nm to 26 nm. In an embodiment, the average pore diameter of the silicon-based active material particle may be in a range from 17 nm to 24 nm.

In some embodiments, the porosity of the silicon-based active material particle may be in a range from 0.97% to 3.45%, and the average pore diameter may be in a range from 17 nm to 26 nm. Accordingly, the pores may be distributed in the entire silicon-based active material particle, so that volume expansion may be further suppressed.

In some embodiments, the silicon-based active material particle may further include a carbon coating disposed on a surface of the particle. Accordingly, the silicon-based active material particles may be prevented from contacting moisture in an atmosphere and/or water in an anode slurry, and an electrical conductivity may be enhanced. Thus, a discharge capacity and a capacity retention of the lithium secondary battery may be improved.

For example, the carbon coating may include an amorphous carbon, a carbon nanotube, a carbon nanofiber, graphite, graphene, graphene oxide, reduced graphene oxide and/or a conductive polymer. For example, the conductive polymer may include polyacetylene, polyaniline, polypyrrole and/or polythiophene. These may be used alone or in combination of two or more therefrom.

In some embodiments, a specific surface area of the silicon-based active material particles above may be 7.0 $m^2$/g or less. In an embodiment, the specific surface area of the silicon-based active material particle may be in a range from 2.4 $m^2$/g to 7.0 $m^2$/g.

In an embodiment, the specific surface area of the silicon-based active material particles may be less than 7.0 $m^2$/g. For example, the specific surface area of the silicon-based active material particles may be in a range from 2.4 $m^2$/g to 6.9 $m^2$/g, from 3.5 $m^2$/g to 7.0 $m^2$/g, or from 3.8 $m^2$/g to 7.0 $m^2$/g. In the above range, volume expansion rate of the silicon-based active material particle may be reduced while suppressing the side reactions with the electrolyte solution.

For example, the specific surface area may be measured using a Brunauer-Emmett-Teller (BET) analysis method.

In some embodiments, the anode active material may further include a carbon-based active material particles. The carbon-based active material particles may refer to active material particles containing carbon and containing no silicon.

For example, the anode active material may include both the the above-described silicon-based active material particle and the carbon-based active material particle. Accordingly, volume expansion of the anode active material during repeated charging and discharging may be reduced, and the life-span properties may be improved.

For example, the carbon-based active material particle may include soft carbon, hard carbon, artificial graphite, and/or natural graphite.

In some embodiments, the carbon-based active material particle may include a graphite-based active material including artificial graphite and/or natural graphite. In an embodiment, the carbon-based active material particle may include artificial graphite. In this case, reduction of life-span stability due to volume expansion and the side reactions of the silicon-based active material particle may be more effectively prevented.

In some embodiments, a content of the silicon-based active material particle may be in a range from 0.1 weight percent (wt%) to 35 wt% based on a total weight of the anode active material. For example, the content of the silicon-based active material particle may be in a range from 0.1 wt% to 35 wt% on a sum of weights of the silicon-based active material particle and the weight of the carbon-based active material particle. In the above range, the capacity properties of the anode active material may be improved while improving the life-span properties.

In some embodiments, the content of the carbon-based active material particle may be in a range from 30 wt% to 95 wt% based on the total weight of the anode active material. In the above range, the life-span properties may be improved while suppressing a capacity reduction of the anode active material.

The content of the silicon-based active material particles based on the total weight of the anode active material (e.g., the total weight of the plurality of the silicon-based active material particles and the carbon-based active material) may be 0.1 wt% or more, 1 wt% or more, 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more, or 99.9 wt% or less, 99 wt% or less, 97 wt% or less, 95 wt% or less, 90 wt% or less, 85 wt% or less, 80 wt% or less, 75 wt% or less, 70 wt% or less, 65 wt% or less, 60 wt% or less, 55 wt% or less, 50 wt% or less, 40 wt% or less, 30 wt% or less, 20 wt% or less, 15 wt% or less, or 10 wt% or less.

In an embodiment, the anode active material may substantially consist of the silicon-based active material particles and the carbon-based active material.

Hereinafter, a method for preparing the anode active material for a lithium secondary battery described above will be described.

In example embodiments, a mixture of a silicon source and a metal element may be vaporized.

For example, the silicon source may include at least one selected from the group consisting of silicon and silicon dioxide ($SiO_2$). In an embodiment, the silicon source may be used by mixing silicon and silicon dioxide.

In some embodiments, the silicon source and the metal element may be introduced into a reactor and fired at a temperature ranging from 1350 °C to 1450 °C in a vacuum state to be vaporized. In the firing temperature range, pores may be sufficiently formed while decreasing an average pore diameter.

In example embodiments, the vaporized mixture may be in contact with a cooling plate to form the silicon-based active material particles being doped with the metal element and including pores. The porosity of the silicon-based active material particles defined by the above Equation 1 may be in a range from 0.4% to 3.5%.

In some embodiments, a temperature of the cooling plate may be in a range from 750 °C to 900 °C. In the cooling plate temperature range, the porosity may be increased while decreasing the average pore size.

Hereinafter, a lithium secondary battery including the anode active material for a lithium secondary battery as described above will be described.

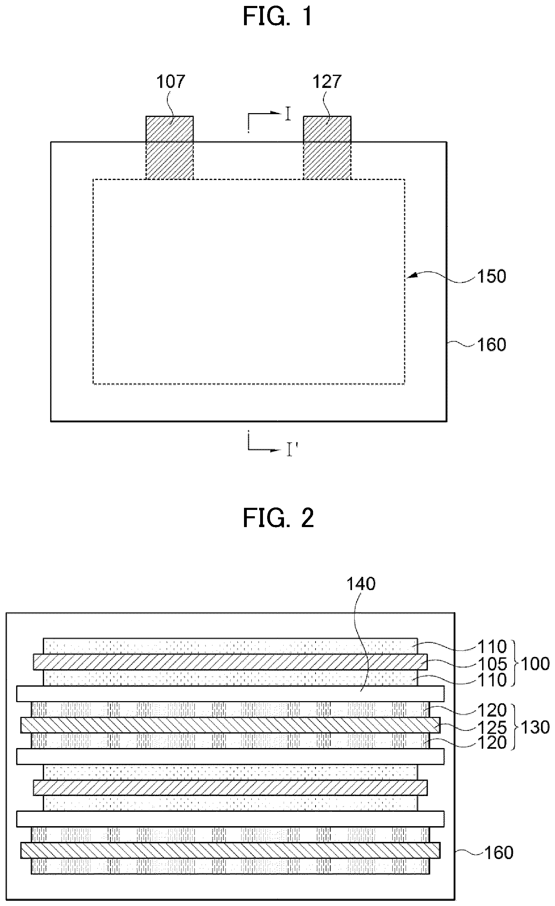

FIGS. 1 and 2 are a schematic plan view and a schematic cross-sectional view, respectively, illustrating a lithium secondary battery in accordance with example embodiments. For example, FIG. 2 is a cross-sectional view taken along a line I-I' of FIG. 1 in a thickness direction.

The lithium secondary battery may include an anode 130 including the above-described anode active material and the cathode 100 facing the anode 130.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, silver, etc. For example, a thickness of the cathode current collector 105 may be 10 μm to 50 μm.

The cathode active material layer 110 may include a cathode active material. The cathode active material may include a compound capable of reversibly intercalating and deintercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Chemical Formula 1.

$$[\text{Chemical Formula 1}] \qquad Li_xNi_aM_bO_{2+z}$$

In Chemical Formula 1, $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide particle may include a layered structure or a crystal structure represented by Chemical Formula 1-1.

$$[\text{Chemical Formula 1-1}] \qquad Li_xNi_aM1_{b1}M2_{b2}O_{2+z}$$

In Chemical Formula 1-1, M1 may include Co, Mn and/or Al. M2 may include the above-described auxiliary element. In Chemical Formula 1-1, $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The doping element of the coating element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., , a mole fraction of nickel based on the total number of moles of nickel, cobalt and manganese) may be 0.5 or more, 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include a Li-rich layered oxide (LLO)/OLO (Over-Lithiated Oxide)-based active material, a Mn-rich active material, a Co-less-based active material, etc., which may have a chemical structure or a crystal structure represented by Chemical Formula 2 below. These may be used alone or in a combination of two or more therefrom.

[Chemical Formula 2] $\quad p[Li_2MnO_3] \cdot (1-p)[Li_qJO_2]$

In Chemical Formula 2, $0<p<1$, $0.9 \le q \le 1.2$, and J may include at least one element from Mn, Ni, Co, Fe, Cr, V, Cu, Zn, Ti, Al, Mg and B.

For example, the cathode slurry may be prepared by mixing the cathode active material in a solvent. The cathode slurry may be coated on the cathode current collector 105, and then dried and pressed to prepare the cathode active material layer 110. The coating may include, e.g., a gravure coating, a slot die coating, a multi-layered simultaneous die coating, an imprinting, a doctor blade coating, a dip coating, a bar coating, a casting, etc. The cathode active material layer 110 may further include a binder, may optionally further include a conductive material, a thickener, etc.

The solvent may include N-methyl-2-pyrrolidone (NMP), dimethylformamide, dimethylacetamide, N,N-dimethylaminopropylamine, ethylene oxide, tetrahydrofuran, etc.

The binder may include polyvinylidene fluoride (PVDF), vinylidene fluoride-co-hexafluoropropylene copolymer (poly(vinylidene fluoride-co-hexafluoropropylene)), polyacrylonitrile, polymethylmethacrylate, acrylonitrile butadiene rubber (NBR), polybutadiene rubber (BR), styrene-butadiene rubber (SBR), etc. These may be used alone or in a combination of two or more therefrom.

In an embodiment, a PVDF-based binder may be used as the cathode binder. In this case, an amount of the binder for forming the cathode active material layer 110 may be reduced and an amount of the cathode active material may be relatively increased. Accordingly, the power and capacity properties of the secondary battery may be improved.

The conductive material may be used to improve conductivity of the cathode active material layer 110 and/or mobility of lithium ions or electrons. For example, the conductive material may include a carbon-based conductive material such as graphite, carbon black, acetylene black, Ketjen black, graphene, a carbon nanotube, a vapor-grown carbon fiber (VGCF), a carbon fiber and/or a metal-based conductive material such as tin, tin oxide, titanium oxide, a perovskite material including $LaSrCoO_3$ and $LaSrMnO_3$, etc. These may be used alone or in a combination of two or more therefrom.

The cathode slurry may further include a thickener and/or a dispersive agent. In an embodiment, the cathode slurry may include the thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector 125 may be in a range from 10 $\mu$m to 50 $\mu$m.

The anode active material layer 120 may include the above-described anode active material including the silicon-based active material particle.

The anode active material may be mixed with a solvent to prepare an anode slurry. The anode slurry may be coated or deposited on the anode current collector 125, and then dried and pressed to form the anode active material layer 120. The coating may include a gravure coating, a slot die coating, a multi-layered simultaneous die coating, an imprinting, a doctor blade coating, a dip coating, a bar coating, a casting, etc. The anode active material layer 120 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in a combination of two or more therefrom.

The above-described materials used in the fabrication of the cathode 100 may also be used as the binder, the conductive material and thickener.

In some embodiments, a styrene-butadiene rubber (SBR)-based binder, carboxymethyl cellulose (CMC), a polyacrylic acid-based binder, a poly(3,4-ethylenedioxythiophene (PEDOT)-based binder, etc., may be used as the anode binder. These may be used alone or in a combination of two or more therefrom.

In example embodiments, a separator 140 may be interposed between the cathode 100 and the anode 130. The separator 140 may be included to prevent an electrical short-circuiting between the cathode 100 and the anode 130 while allowing an ion flow. For example, a thickness of the separator may be in a range from 10 $\mu$m to 20 $\mu$m.

For example, the separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or a multi-layered structure including the polymer film and/or the non-woven fabric as described above.

In example embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking, z-folding, stack-folding, etc., of the separator 140.

The electrode assembly 150 may be accommodated together with an electrolyte solution in a case 160 to define the lithium secondary battery. In example embodiments, a non-aqueous electrolyte solution may be used as the electrolyte solution.

The non-aqueous electrolyte solution may include a lithium salt serving as an electrolyte and an organic solvent. The lithium salt may be represented by, e.g., $Li^+X^-$, and examples of an anion X- may include F-, Cl-, Br, I-, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

Examples of the organic solvent include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution. In this case, the lithium secondary battery may be manufactured in the form of an all-solid-state battery. Additionally, a solid electrolyte layer may be disposed between the cathode 100 and the anode 130 instead of the separator 140.

The solid electrolyte may include a sulfide-based electrolyte. Non-limiting examples of the sulfide-based electrolyte include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z represents Ge, Zn or Ga), $Li_2S$-$GeS_2$, $Li_2S$-$SiS_2$-$Li_3PO_4$, $Li_2S$-$SiS_2$-$Li_pMO_q$, (p and q positive numbers, and M represents P, Si, Ge, B, Al, Ga or In), $Li_7$-$xPS_6$-$xCl_x$ (0<x≤2), $Li_7$-$xPS_6$-$xBr_x$ (0<x≤2), $Li_7$-$xPS_6$-$xI_x$ (0<x≤2), etc. These may be used alone or in a combination of two or more therefrom.

In an embodiment, the solid electrolyte may include an oxide-based amorphous solid electrolyte such as $Li_2O$-$B_2O_3$-$P_2O_5$, $Li_2O$-$SiO_2$, $Li_2O$-$B_2O_3$, $Li_2O$-$B_2O_3$-ZnO, etc.

As illustrated in FIGS. 1 and 2, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a prismatic shape, a pouch shape or a coin shape.

Example 1

Preparation of silicon-based active material particle

Silicon (Si) and silicon dioxide ($SiO_2$) as silicon sources, and magnesium (Mg) as a metal element were mixed and placed in a reactor. A content of the metal element based on a total weight of the silicon source and the metal element was 7.4 wt%, and a weight ratio of silicon and silicon dioxide was 1:1.

A temperature of the reactor was increased to 1400 °C at a heating rate of 3 °C/min and maintained for about 30 minutes to vaporize the silicon source and the metal element. A pressure at an inside of the reactor was maintained below $10^{-3}$ torr or less.

The vaporized silicon source and metal element were in contact with a cooling plate maintained at 900 °C to manufacture silicon-based active material particles.

Formation of anode

95.5 wt% of an anode electrode active material including a mixture of 10 wt% of the silicon-based active material particle and 85.5 wt% of artificial graphite, 1 wt% of CNT as a conductive material, 2 wt% of styrene-butadiene rubber (SBR) as a binder and 1.5 wt% of carboxymethyl cellulose (CMC) as a thickener were mixed to obtain an anode slurry.

The anode slurry was coated on a copper substrate having a thickness of 12 $\mu$m, dried and pressed to obtain an anode.

Fabrication of a lithium secondary battery

A lithium half-cell including the anode and using a lithium metal as a counter electrode (cathode) was manufactured.

Specifically, a lithium coin half-cell of a CR2016 (diameter: 20 mm, thickness: 1.6 mm) standard was formed by interposing a separator (polyethylene, thickness: 20 $\mu$m) between the anode and the lithium metal (thickness: 1 mm).

The assembly of the lithium metal/separator/anode was placed in a coin cell plate, and a cap was covered and clamped after injecting an electrolyte solution. In the preparation of the electrolyte solution, a 1 M $LiPF_6$ solution was formed using a mixed solvent of EC/EMC (3:7; volume ratio), and 2.0 vol% of fluoroethylene carbonate (FEC) was added based on a total volume of the electrolyte solution. After the clamping, impregnation was performed for 3 to 24 hours, and formation charge and discharge were performed (charge conditions: CC-CV 0.1C 0.01V 0.01C CUT-OFF, discharge conditions: CC 0.1C 1.5V CUT-OFF).

Example 2 to 7 and Comparative Examples 1 to 4

An anode and a lithium secondary battery were manufactured by the same method as that in Example 1, except that the content of the metal element based on the total weight of the silicon source and the metal element (magnesium, Mg), the reactor temperature, and the cooling plate temperature were changed as shown in Table 1.

Example 8

The silicon-based active material particles of Example 1 were placed in a CVD coater, and a mixed gas of methane gas and argon gas was injected at a flow rate of 50 mL/min to 100 mL/min. The CVD coater was heated by a ramping rate of 5°C/min to 20°C/min and maintained at 900°C for about 60 to 360 minutes at a, thereby obtaining a silicon-based active material particle having a carbon coating formed on a surface thereof.

An anode and a lithium secondary battery were manufactured by the same method as that in Example 1, except that the above-prepared silicon-based active material particle was used.

Example 9

An anode and a lithium secondary battery were manufactured by the same method as that in Example 1, except that aluminum (Al) was used as the metal element.

Example 10

An anode and a lithium secondary battery were manufactured by the same method as that in Example 1, except that calcium (Ca) was used as the metal element.

Example 11

An anode and a lithium secondary battery were manufactured by the same method as that in Example 1, except that titanium (Ti) was used as the metal element.

Example 12

An anode and a lithium secondary battery were manufactured by the same method as that in Example 1, except that vanadium (V) was used as the metal element.

Experimental Example

(1) Measurement of porosity and average pore diameter

30 different silicon-based active material particles were separated as samples from the silicon-based active material particles prepared according to the above-described Examples and Comparative Examples,

The sample was introduced into Hitachi's Ion Milling System IM4000, and a cross-sectional pretreatment was performed for each particle under the following conditions.

[Setting Conditions of Ion Milling System IM4000]

    i) Acceleration voltage: 6 kV
    ii) Discharge current: 110 $\mu$A
    iii) Time: 3 hr

Cross-sections of 30 particles subjected to the cross-sectional pre-processing were photographed under the following conditions with FE-SEM (Field Emission-SEM, Hitachi's SU-8230) to obtain 65 K resolution images.

[Setting Conditions of FE-SEM]

    i) Mode: SE
    ii) Detector: SE
    iii) Acceleration voltage: 5 kV
    iv) current: 10 $\mu$A

In each of the images, the sum Ap of the cross-sectional areas of the pores present in a virtual rectangular region having a width of 1.959 $\mu$m and a length of 1.306 $\mu$m was measured.

In each of the images, the area (As) of a virtual rectangular area having a width of 1.959 $\mu$m and a length of 1.306 $\mu$m was measured.

The total number (Np) of pores present in the virtual rectangular region having a width of 1.959 $\mu$m and a length of 1.306 $\mu$m was measured in each of the images.

The porosity was calculated by using the sum of the Ap values as Ap in Equation 1, and the sum of the As values as As in Equation 1.

An average pore diameter was calculated by using the sum of the Ap values as Ap of Equation 2 and the sum of the Np values as Np of Equation 2.

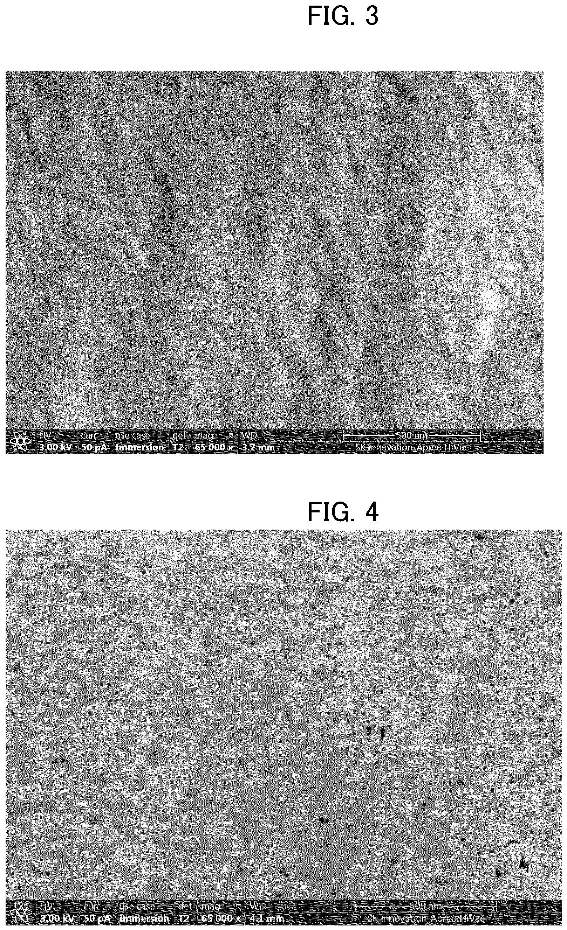

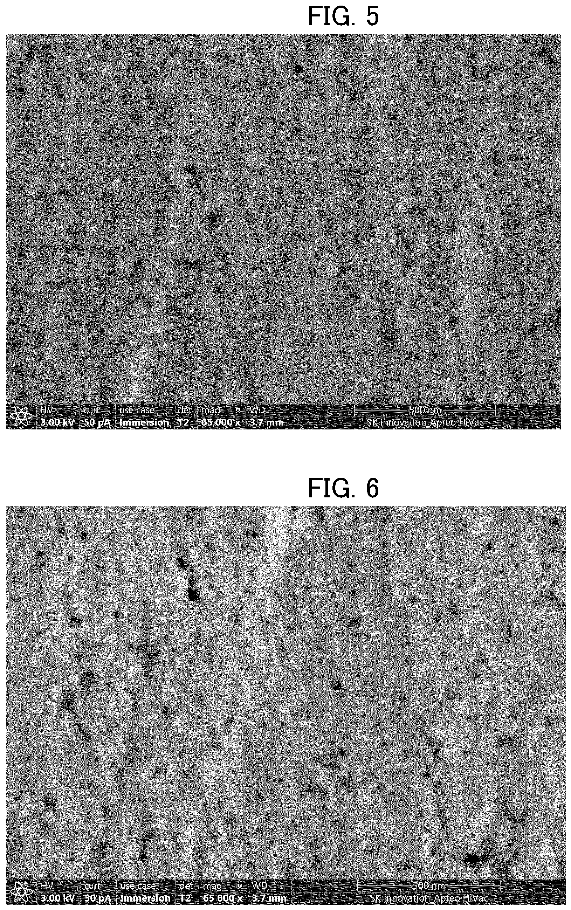

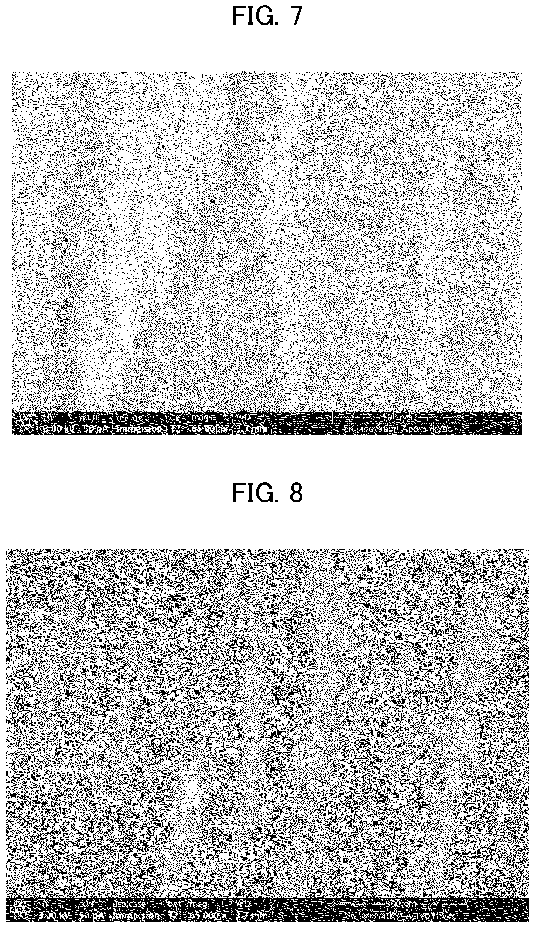

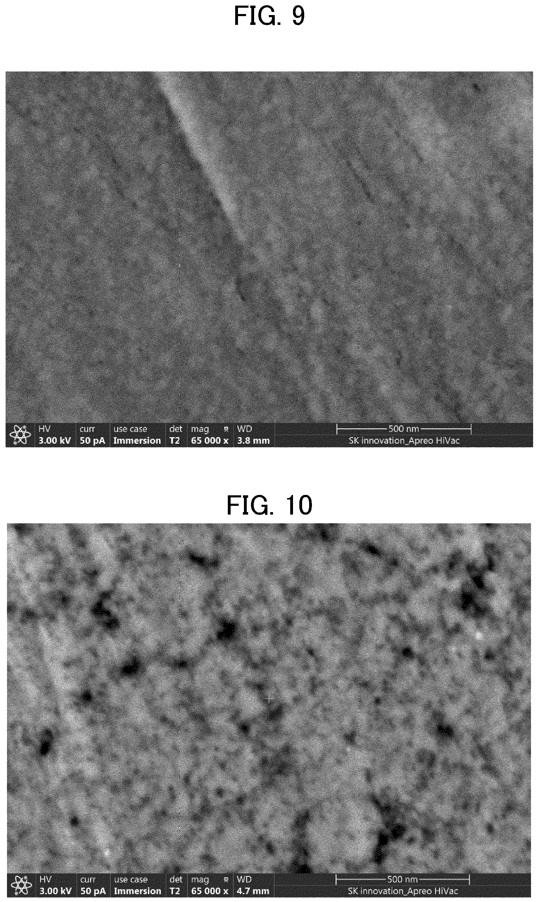

FIGS. 3 to 10 are 65 K resolution scanning electron microscope (SEM) images of cross-sections of silicon-based active material particles according to Examples 1 to 4 and Comparative Examples 1 to 4, respectively.

As acknowledged from FIG. 3 to FIG. 10, a degree to which the pores are included in the silicon-based active material particle may be adjusted and measured.

(2) Measurement of specific surface area

10 g of the silicon-based active material particles prepared according to the above-described Examples and Comparative Examples were separated and used as samples.

The specific surface area of the sample was measured according to a Brunauer-Emmett-Teller (BET) method.

Specifically, the sample was heat-treated at 1000°C for 10 hours and injected into a specific surface area measuring device (TriStar II, Micromeritics) to measure the specific surface area.

(3) Initial Efficiency Evaluation

The lithium secondary battery manufactured according to each of the above-described Examples and Comparative Examples was charged (CC-CV 0.1C 0.01V 0.01C CUT-OFF) and discharged (CC 0.1C 1.5V CUT-OFF) to measure an initial charge capacity (mAh/g) and an initial discharge capacity (mAh/g).

The initial discharge capacity was divided by the initial charging capacity and multiplied by 100 to evaluate an initial efficiency.

(4) Evaluation on electrode expansion ratio

An initial thickness of the anode prepared according to each of the above-described Examples and Comparative Examples was measured, and a thickness of the anode was measured after being fully charged once. The measurement result was substituted into Equation 3 below to calculate an electrode expansion ratio.

$$\text{electrode expansion ratio (\%)} = 100 * \text{(thickness after being fully charged once - initial thickness)/(initial thickness)} \qquad \text{[Equation 3]}$$

(5) Evaluation on capacity retention

Charging (CC-CV 0.5C 0.01V 0.01C CUT) and discharging (CC 0.5C 1.5V CUT-OFF) were repeated by 500 cycles for the lithium secondary batteries according to the above-described Examples and Comparative Examples. A capacity retention was calculated by dividing a discharge capacity at the 500th cycle by a discharge capacity at the 1st cycle and multiplying by 100.

The content based on the total weight of the silicon source and the metal element, the reactor temperature, the cooling plate temperature, and the specific surface area are shown in Table 1 below.

Measurement and evaluation results are shown in Table 1 and Table 2 below.

[Table 1]

| | metal element content (wt%) | reactor temperature (°C) | cooling plate temperature (°C) | porosity (%) | average pore diameter (nm) | specific surface area (m$^2$/g) |
|---|---|---|---|---|---|---|
| Example 1 | 7.4 | 1400 | 900 | 0.42 | 28 | 2.4 |
| Example 2 | 7.8 | 1400 | 850 | 0.97 | 24 | 3.8 |

(continued)

|  | metal element content (wt%) | reactor temperature (°C) | cooling plate temperature (°C) | porosity (%) | average pore diameter (nm) | specific surface area (m²/g) |
|---|---|---|---|---|---|---|
| Example 3 | 7.7 | 1400 | 800 | 1.62 | 26 | 5.5 |
| Example 4 | 8.1 | 1350 | 800 | 1.58 | 31 | 5.6 |
| Example 5 | 8.5 | 1400 | 750 | 2.75 | 17 | 7.0 |
| Example 6 | 11.7 | 1400 | 900 | 3.45 | 23 | 6.9 |
| Example 7 | 8.4 | 1400 | 700 | 3.47 | 26 | 7.1 |
| Example 8 | 7.4 | 1400 | 900 | 0.41 | 25 | 2.0 |
| Example 9 | 7.4 | 1400 | 900 | 0.46 | 29 | 2.7 |
| Example 10 | 7.4 | 1400 | 900 | 0.47 | 27 | 3.1 |
| Example 11 | 7.4 | 1400 | 900 | 0.51 | 26 | 2.5 |
| Example 12 | 7.4 | 1400 | 900 | 0.49 | 24 | 2.6 |
| Comparative Example 1 | 0 | 1400 | 900 | 0 | 0 | 1.6 |
| Comparative Example 2 | 7.6 | 1400 | 1100 | 0 | 0 | 1.7 |
| Comparative Example 3 | 8.0 | 1400 | 950 | 0.39 | 22 | 1.9 |
| Comparative Example 4 | 11.5 | 1400 | 850 | 3.51 | 22 | 7.6 |

[Table 2]

|  | discharge capacity (mAh/g) | initial efficiency (%) | electrode expansion ratio (%) | capacity retention (%, 500cyc) |
|---|---|---|---|---|
| Example 1 | 1293 | 81.9 | 29.5 | 94.8 |
| Example 2 | 1285 | 81.3 | 28.1 | 95.0 |
| Example 3 | 1285 | 81.4 | 27.2 | 95.2 |
| Example 4 | 1291 | 81.6 | 35.7 | 90.2 |
| Example 5 | 1298 | 81.4 | 25.6 | 95.5 |
| Example 6 | 1200 | 85.0 | 27.6 | 95.0 |
| Example 7 | 1275 | 81.1 | 34.5 | 89.7 |
| Example 8 | 1316 | 83.5 | 26.9 | 96.1 |
| Example 9 | 1290 | 81.8 | 29.1 | 94.6 |
| Example 10 | 1292 | 81.9 | 29.4 | 94.5 |
| Example 11 | 1283 | 81.2 | 29.7 | 94.8 |
| Example 12 | 1295 | 82.0 | 29.3 | 94.4 |
| Comparative Example 1 | 1647 | 76.6 | 46.9 | 75.7 |
| Comparative Example 2 | 1412 | 78.3 | 39.8 | 79.3 |
| Comparative Example 3 | 1366 | 78.7 | 35.1 | 87.1 |
| Comparative Example 4 | 1201 | 81.3 | 30.3 | 87.5 |

Referring to Tables 1 and 2, in Examples where the porosity of the silicon-based active material particles was in a range from 0.4% to 3.5%, the initial efficiency and the capacity retention were improved and the electrode expansion ratio was decreased compared to those of the Comparative Examples.

In Examples 2, 3, 5 and 6 where the porosity was in a range from 0.97% to 3.45% and the average pore diameter was in a range from 17 nm to 26 nm, the initial efficiency and the capacity retention were relatively enhanced and the electrode expansion ratio was lowered compared to those from other Examples.

In Example 8 where the carbon coating was formed on the surface of the silicon-based active material particle, the initial efficiency and the capacity retention were relatively enhanced and the electrode expansion ratio was lowered compared to those from other Examples.

In Example 4 where the average pore diameter exceeded 30 nm, the capacity retention was relatively lowered.

In Example 7 having the specific surface area greater than 7.0 m$^2$/g, the initial efficiency and the capacity retention were relatively lowered compared to those from other Examples.

**Claims**

1. An anode active material for a lithium secondary battery comprising a silicon-based active material particle being doped with a metal element and including pores,

   wherein a porosity of the silicon-based active material particle as defined by Equation 1 is in a range from 0.4% to 3.5%:

   $$porosity\ (\%) = (Ap/As)*100 \quad [Equation\ 1]$$

   wherein, in Equation 1, Ap is a total sum of cross-sectional areas of the pores included in a 65 K resolution image of a cross-section of the silicon-based active material particle obtained by a scanning electron microscope (SEM), and As is a total cross-sectional area of the silicon-based active material particle included in the 65 K resolution image of the cross-section of the silicon-based active material particle obtained by the SEM.

2. The anode active material for a lithium secondary battery according to claim 1, wherein the metal element includes at least one selected from the group consisting of Mg, Al, Ca, Ti and V.

3. The anode active material for a lithium secondary battery according to any one of claims 1 and 2, wherein the silicon-based active material particle includes at least one selected from the group consisting of Si, SiOx (0<x≤2) and a Si-C composite.

4. The anode active material for a lithium secondary battery according to any one of claims 1 to 3, wherein the porosity is in a range from 0.97% to 3.45%.

5. The anode active material for a lithium secondary battery according to any one of claims 1 to 4, wherein the average pore diameter of the silicon-based active material particle as defined by Equation 2 is in a range from 2 nm to 30 nm:

   $$average\ pore\ diameter\ (nm) = 2 \times \sqrt{\frac{Ap}{Np \times \pi}} \quad [Equation\ 2]$$

   wherein, in Equation 2, Ap is the total sum of cross-sectional areas of the pores included in the 65 K resolution image of the cross-section of the silicon-based active material particle obtained by the SEM, and Np is the total number of the pores included in the 65 K resolution image of the cross-section of the silicon-based active material particle obtained by the SEM.

6. The anode active material for a lithium secondary battery according to claim 5, wherein the average pore diameter is in a range from 17 nm to 26 nm.

7. The anode active material for a lithium secondary battery according to any one of claims 1 to 6, wherein the silicon-based active material particle includes a carbon coating disposed on a surface portion thereof.

8. The anode active material for a lithium secondary battery according to any one of claims 1 to 7, wherein the silicon-based active material particle has a specific surface area of 7.0 m$^2$/g or less.

9. The anode active material for a lithium secondary battery according to any one of claims 1 to 7, wherein the silicon-based active material particle has a specific surface area in a range from 2.4 m$^2$/g to 7.0 m$^2$/g.

10. The anode active material for a lithium secondary battery according to any one of claims 1 to 9, further comprising a carbon-based active material particle.

11. The anode active material for a lithium secondary battery according to claim 10, wherein the carbon-based active material particle includes at least one selected from the group consisting of soft carbon, hard carbon, artificial graphite and natural graphite.

12. The anode active material for a lithium secondary battery according to claim 10, wherein the carbon-based active material particle includes artificial graphite.

13. The anode active material for a lithium secondary battery according to any one of claims 10 to 12, wherein a content of the silicon-based active material particle is in a range from 0.1 wt% to 35 wt% based on a total weight of the anode active material.

14. The anode active material for a lithium secondary battery according to any one of claims 1 to 13, wherein a content of the metal element is in a range from 3 wt% to 15 wt% based on a weight of the silicon-based active material particle.

15. A lithium secondary battery, comprising:

   an anode including the anode active material for a lithium secondary battery according to any one of claims 1 to 14; and
   a cathode facing the anode.

# FIG. 1

# FIG. 2

# FIG. 3

# FIG. 4

## FIG. 5

## FIG. 6

# FIG. 7

# FIG. 8

# FIG. 9

# FIG. 10

Europäisches
Patentamt

European
Patent Office

Office européen
des brevets

## EUROPEAN SEARCH REPORT

**Application Number**

EP 25 15 1092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/131519 A1 (TOSOH CORP [JP]) 4 July 2019 (2019-07-04) | 1-5,7-15 | INV. H01M4/134 |
| A | * Comparative Example 1 * * paragraphs [0059], [0063], [0065], [0236] * * "Carbon coating step with coal pitch" * | 6 | H01M4/36 H01M4/38 H01M10/0525 H01M4/02 |
| X,P | EP 4 376 120 A1 (SK ON CO LTD [KR]; SK INNOVATION CO LTD [KR]) 29 May 2024 (2024-05-29) | 1-4,7, 10-15 | |
| A,P | * claims 1,4,5,9-11 * * examples 1-10 * | 5,6,8,9 | |
| A | US 2022/069304 A1 (KANG SEOK MIN [KR]) 3 March 2022 (2022-03-03) * claims 1,4,9 * * paragraphs [0059], [0079] * | 1-4,7-15 | |

**TECHNICAL FIELDS
SEARCHED      (IPC)**

H01M

The present search report has been drawn up for all claims

| Place of search | Date of completion of the search | Examiner |
|---|---|---|
| Munich | 6 May 2025 | Galbiati, Ivano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

# EP 4 586 335 A1

## ANNEX TO THE EUROPEAN SEARCH REPORT
## ON EUROPEAN PATENT APPLICATION NO.

EP 25 15 1092

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | | | Publication date | Patent family member(s) | | Publication date |
|---|---|---|---|---|---|---|
| WO 2019131519 | A1 | 04-07-2019 | | JP | 7293645 B2 | 20-06-2023 |
| | | | | JP | 7452599 B2 | 19-03-2024 |
| | | | | JP | 2020068191 A | 30-04-2020 |
| | | | | JP | 2023011743 A | 24-01-2023 |
| | | | | TW | 201935748 A | 01-09-2019 |
| | | | | WO | 2019131519 A1 | 04-07-2019 |
| EP 4376120 | A1 | 29-05-2024 | | CN | 118073557 A | 24-05-2024 |
| | | | | EP | 4376120 A1 | 29-05-2024 |
| | | | | KR | 20240076554 A | 30-05-2024 |
| | | | | US | 2024170660 A1 | 23-05-2024 |
| US 2022069304 | A1 | 03-03-2022 | | CN | 113169319 A | 23-07-2021 |
| | | | | JP | 7541979 B2 | 29-08-2024 |
| | | | | JP | 2022510190 A | 26-01-2022 |
| | | | | KR | 20200075209 A | 26-06-2020 |
| | | | | TW | 202030910 A | 16-08-2020 |
| | | | | US | 2022069304 A1 | 03-03-2022 |
| | | | | WO | 2020130434 A1 | 25-06-2020 |

EPO FORM P0459

For more details about this annex : see Official Journal of the European Patent Office, No. 12/82

21